(19) Europäisches Patentamt
European Patent Office
Office européen des brevets

(11) **EP 2 343 525 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(51) Int Cl.:
*G01K 7/42* (2006.01)          *G01N 25/18* (2006.01)

(21) Anmeldenummer: **10193903.1**

(22) Anmeldetag: **07.12.2010**

(54) **Verfahren und Vorrichtung zur Abschätzung der beim Berühren einer Oberfläche empfundenen Temperatur**

Method and device for estimating the temperature sensed upon contact with a surface

Procédé et dispositif d'évaluation de la température ressentie lors du contact avec une surface

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.01.2010 DE 102010000701**

(43) Veröffentlichungstag der Anmeldung:
**13.07.2011 Patentblatt 2011/28**

(73) Patentinhaber: **Ford Global Technologies, LLC Dearborn, MI 48126 (US)**

(72) Erfinder:
• **Spingler, Mark**
  **50189, Elsdorf (DE)**
• **van Laack, Alexander**
  **52072, Aachen (DE)**

(74) Vertreter: **Dörfler, Thomas**
  **Ford-Werke GmbH**
  **Abt. NH/364**
  **Henry-Ford-Strasse 1**
  **50735 Köln (DE)**

(56) Entgegenhaltungen:
**WO-A2-2007/093744     US-B1- 7 365 330**

**Beschreibung**

Die Erfindung betrifft ein Verfahren sowie eine Vorrichtung zur Abschätzung der beim Berühren einer Oberfläche empfundenen Temperatur. Wenngleich die Erfindung insbesondere vorteilhaft in der Kraftfahrzeugindustrie einsetzbar ist, ist die Erfindung hierauf nicht beschränkt. Vielmehr ist die Erfindung in sämtlichen technologischen Bereichen anwendbar, in welchen die Qualitätswahrnehmung (insbesondere Haptik und Fühlbarkeit) von Produkten optimiert werden soll, also z.B. auch in der Elektronik- oder Möbelindustrie.

Die Messung bzw. Abschätzung der Kontakttemperatur einer Oberfläche kann z.B. erforderlich sein, um die sichtbare und fühlbare Authentizität bzw. Echtheit von Materialien quantitativ einschätzen zu können. Hierbei kann als charakteristischer Parameter der sogenannte Wärmeeindringkoeffizient (auch: Wärmeeindringzahl) bestimmt werden. Dabei tritt das Problem auf, dass dieser Wärmeeindringkoeffizient herkömmlicherweise nur in großmaßstäbigen Maschinen an Testmaterialien bestimmt wird.

Insbesondere in Kraftfahrzeugen besteht aber ein Bedarf, das Temperaturempfinden bei der Berührung unterschiedlicher, insbesondere im Fahrzeuginnenraum vorkommender Materialien bzw. den Wärmeeindringkoeffizienten der im Fahrzeuginnenraum vorhandenen Materialien zerstörungsfrei, kontaktlos sowie unabhängig von der Oberflächengestaltung abzuschätzen. Zugleich sollte die Größe der hierzu eingesetzten Messvorrichtung dergestalt sein, dass diese z.B. von einem Messroboter handhabbar ist.

Aus DE 39 01 377 A1 ist ein Verfahren zur Wärmeleitfähigkeitsbestimmung auf der Grundlage von Thermospannungsmessungen mittels eines Aktor-SensorSystems an einem Material bekannt, in dem ein Temperaturgefälle erzeugt wurde. Bei diesem Verfahren wird die erforderliche Temperaturdifferenz durch einen in einer ersten Betriebsart als Peltierelement betriebenen Aktor erzeugt. Die Zu- bzw. Abführung der stromproportionalen Peltierwärme wird kurzzeitig und periodisch unterbrochen, wobei der Aktor während dieser Unterbrechungen durch elektronische Umschaltung in einer zweiten Betriebsart als Sensor arbeitet, der die momentane temperaturdifferenzproportionale Thermospannung erfasst. Aus WO 2007/093744 A2 und US 7,365,330 B1 sind jeweils Verfahren und Vorrichtungen zur Materialcharakterisierung auf Basis einer berührungslosen Erwärmung durch z.B. gepulste Bestrahlung mit Licht bekannt.

Eine Aufgabe der vorliegenden Erfindung besteht darin, ein Verfahren sowie eine Vorrichtung zur Abschätzung der beim Berühren einer Oberfläche empfundenen Temperatur bereitzustellen, welches bzw. welche eine zuverlässige Charakterisierung unabhängig von der konkreten Oberflächengestaltung wie z.B. Oberflächenfarbe oder Transmissionsverhalten ermöglicht und zugleich zerstörungsfrei sowie mobil einsetzbar ist.

Diese Aufgabe wird durch ein Verfahren gemäß den Merkmalen des unabhängigen Patentanspruchs 1 sowie eine Vorrichtung gemäß den Merkmalen des unabhängigen Patentanspruchs 3 gelöst.

Ein Verfahren zur Abschätzung der beim Berühren einer Oberfläche empfundenen Temperatur weist folgende Schritte auf: Berührungsloses Erwärmen der Oberfläche, Berührungsloses Messen der zeitlichen Temperaturänderung der Oberfläche, und Abschätzen der beim Berühren der Oberfläche empfundenen Temperatur auf Basis dieser zeitlichen Temperaturänderung.

Dadurch, dass das erfindungsgemäße Verfahren berührungslos und zerstörungsfrei arbeitet, wird sichergestellt, dass keine Veränderungen an der zu untersuchenden Oberfläche vorgenommen werden und somit auch keine Rückstände bestehen bleiben, so dass das Verfahren auch für den Einsatz in Vergleichsstudien bzw. Benchmark-Tests geeignet ist. Das erfindungsgemäße Verfahren ermöglicht hierbei die zerstörungsfreie sowie mobil einsetzbare Abschätzung der vom Menschen empfundenen Temperatur für eine breite Vielfalt von Oberflächen bzw. Materialien wie z.B. Metall, Holz, Kunststoff, Schaumstoff, etc.

Bei dem erfindungsgemäßen Verfahren können unterschiedliche, berührungslose Technologien zum Erwärmen bzw. Aufheizen der Oberfläche eingesetzt werden. Ohne dass die Erfindung hierauf beschränkt wäre, können diese Technologien z.B. die Verwendung von Halogenlicht, Infrarotlicht, Licht einer Laserlichtquelle oder die Ausnutzung von Wärmeleitung (über die Zufuhr von erwärmter Luft etwa mittels eines Gebläses) beinhalten.

Um sicherzustellen, dass die mittels des erfindungsgemäßen Verfahrens erzielten Ergebnisse objektiv vergleichbar und unabhängig von der konkreten Oberflächengestaltung sind, insbesondere unabhängig von der jeweiligen Farbe oder dem Transmissionsverhalten der Oberfläche, können diverse Modifikationen zur Vereinheitlichung der Oberfläche eingesetzt werden. Diese Modifikationen können den Einsatz von Wärmeleitpaste, von (Papier-)Aufklebern oder Tapes mit speziellem Durchlässigkeitsverhalten, die Verwendung einer geeigneten Flüssigkeit (z.B. mit zwei Volumenteilen matter schwarzer Farbe und einem Volumenteil Isopropanol) oder den Einsatz von Russpartikeln, welche in Teflonfiltern gespeichert und von diesen auf die jeweiligen Proben übertragen werden können, umfassen und auch in geeigneter kompakter Weise miteinander kombiniert werden, so dass die Modifikation bzw. Vereinheitlichung sowohl im Labor als auch mobil (z.B. in einem Messroboter) angewandt werden kann.

Gemäß einer Ausführungsform umfasst der Schritt des Erwärmens der Oberfläche ein getaktetes Erwärmen der Oberfläche. Hierdurch wird es möglich, unterschiedliche zu untersuchende Oberflächen bzw. Materialien mit einer im Vergleich zu einer konstanten, gleichmäßigen Erwärmung höheren Auflösung zu unterscheiden, da die jeweils erhaltenen, die Zeitabhängigkeit der Temperaturänderung beschreibenden Funktionen bzw. Messkurven sich nicht nur in der Steigung (der jeweiligen Regressionsgerade), sondern auch in den einzelnen durch die getaktete Erwärmung erzeugten Abklingkurven voneinander unterscheiden.

Gemäß einer Ausführungsform umfasst der Schritt des Abschätzens der beim Berühren der Oberfläche empfundenen Temperatur die Ermittlung eines Parameters vl, der gegeben ist durch

$$vl = \frac{1}{m \cdot a}$$

wobei m die Steigung einer für die die Zeitabhängigkeit der Temperaturänderung beschreibenden Funktion ermittelten Regressionsgerade und a die mittlere Amplitude der durch die getaktete Erwärmung erzeugten Abklingkurven in dieser Funktion bezeichnen.

Gemäß einer Ausführungsform erfolgt der Schritt des Abschätzens der beim Berühren der Oberfläche empfundenen Temperatur auf Basis einer Kalibrierung, in welcher der o.g. Parameter für eine Mehrzahl von Referenzoberflächen ermittelt wird.

Gemäß einer Ausführungsform umfasst diese Kalibrierung die Zuordnung der für die Mehrzahl von Referenzoberflächen ermittelten Parameter (vi) zu einem jeweiligen, für die betreffende Referenzoberfläche bekannten Wert der (im Weiteren definierten) Wärmeeindringzahl.

Gemäß eines weiteren Aspekts betrifft die Erfindung eine Vorrichtung zur Abschätzung der beim Berühren einer Oberfläche empfundenen Temperatur, welche eine Wärmequelle zum berührungsfreien Erwärmen der Oberfläche, ein Thermometer zur berührungsfreien Messen der Temperatur der Oberfläche und eine Auswerteeinheit aufweist, welche auf Basis einer durch das Erwärmen hervorgerufenen zeitlichen Änderung der Temperatur der Oberfläche einen für die beim Berühren der Oberfläche empfundene Temperatur charakteristischen Parameter ermittelt.

Gemäß einer Ausführungsform ist die Vorrichtung zum getakteten Erwärmen der Oberfläche mittels der Wärmequelle ausgelegt. Hierzu kann die Vorrichtung insbesondere eine rotierbare, mit wenigstens einer Öffnung versehene Abschirmung aufweisen, wobei die Oberfläche durch die Öffnung hindurch mit Wärmeenergie beaufschlagbar ist.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen näher erläutert.

Es zeigen:

Figur 1a-b den Aufbau einer Messanordnung in schematischer Vorderansicht (Figur 1 a) bzw.

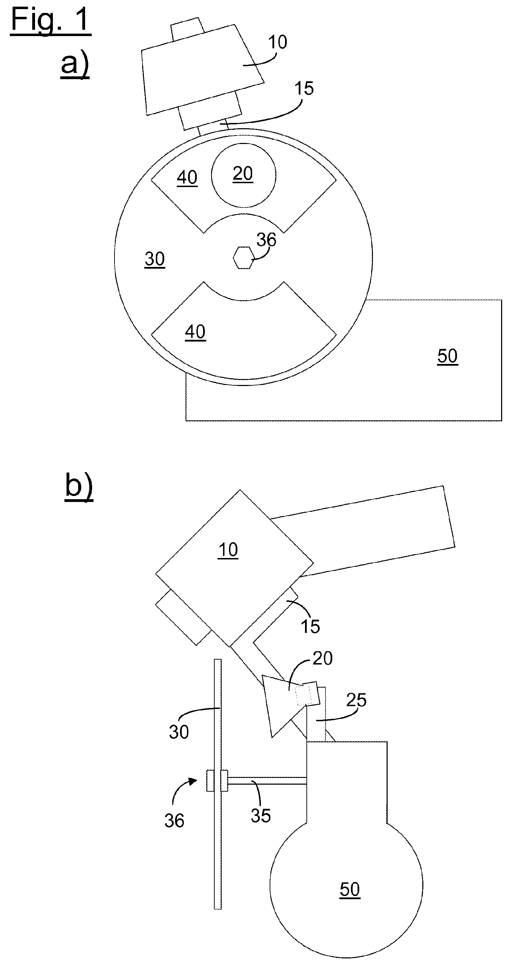

Seitenansicht (Figur 1 b) gemäß einer Ausführungsform der Erfindung;

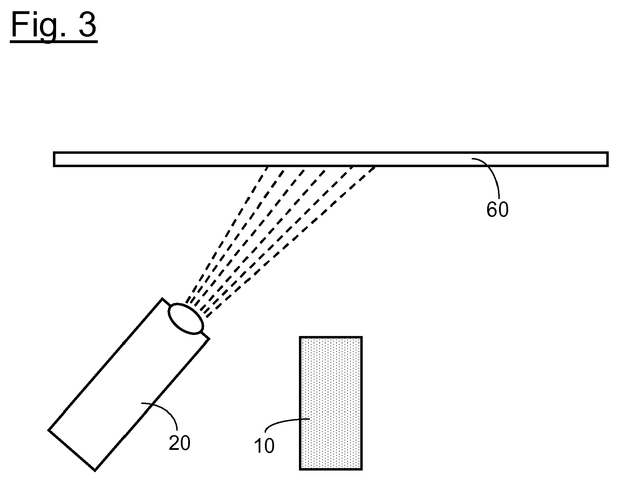

Figur 2-3 schematische Darstellungen zur Erläuterung der Arbeitsweise der Messanordnung von Figur 1; und

Figur 4-5 Diagramme zur Erläuterung des erfindungsgemäßen Verfahrens sowie der Kalibrierung der Messanordnung von Figur 1.

Die Fig. 1a und 1b zeigen lediglich schematisch den Aufbau einer erfindungsgemäßen Messanordnung in schematischer Vorderansicht (Fig. 1a) bzw. Seitenansicht (Fig. 1 b).

Die Anordnung gemäß Fig. 1 weist eine im Ausführungsbeispiel als Halogenlampe ausgestaltete Wärmequelle 20 sowie ein von einem Träger 15 gehaltenes (Infrarot-)Thermometer 10 auf. Wenngleich die im Weiteren beschriebene Erwärmung unter Verwendung einer Halogenlampe als Wärmequelle vorgenommen wird, ist die Erfindung nicht hierauf beschränkt. So kann gemäß weiterer, nicht dargestellter Ausführungsformen auch eine berührungslose Erwärmung mittels einer Infrarotlampe, einer Glühlampe, einer Laserlichtquelle oder mittels eines Gebläses bzw. eines regelbaren Heißluftföns erfolgen.

Die die Wärmequelle 20 im Ausführungsbeispiel von Fig. 1 bildende Halogenlampe wird ihrerseits über einen Träger 25 gehalten, welcher im Ausführungsbeispiel an dem Gehäuse eines Elektromotors 50 fixiert (z.B. verschraubt) ist. Eine Welle 35 des Elektromotors 50 ist über eine SchraubenMutter-Verbindung 36 an eine drehbare Scheibe bzw. Abschirmung 30 fixiert, welche Öffnungen 40 für den Durchlass von Licht bzw. Wärme aufweist und im Übrigen (zumindest im Wesentlichen) wärme- bzw. lichtundurchlässig ist.

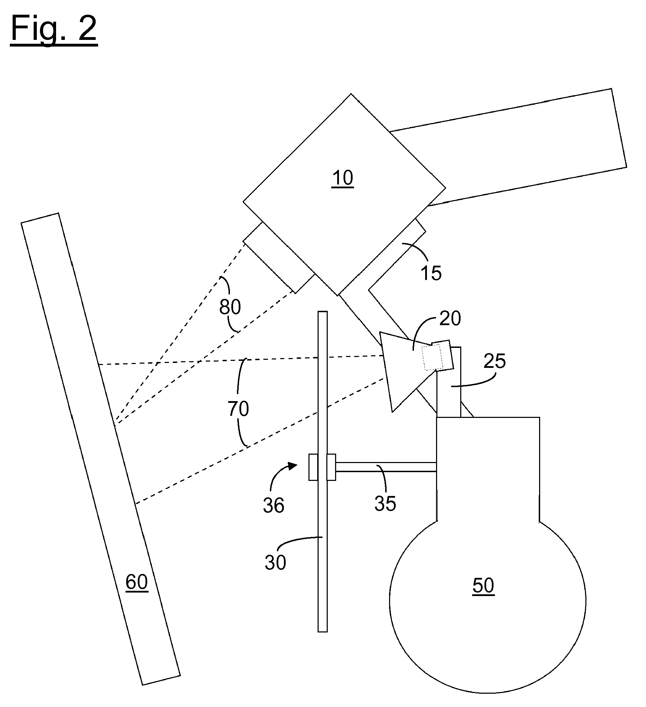

Das Thermometer 10 ist gemäß Fig. 2 so angebracht, dass es über den Rand der drehbaren Scheibe bzw. Abschirmung 30 hinweg die Temperatur auf einer Probenoberfläche einer Probe 60 messen kann, wobei typischerweise ein Abstand von einigen (z.B. 5-20) cm von der zu charakterisierenden Oberfläche besteht.

Zur Sicherstellung einer objektiven bzw. von Farbe und Transmissionseigenschaften der jeweiligen Oberflächen unabhängigen Messung wird vorab an der zu untersuchenden Probe 60 eine geeignete Homogenisierung bzw. Oberflächenmodifikation durchgeführt, nach der sämtliche Proben übereinstimmende Farbeigenschaften sowie Oberflächenstrukturen besitzen. Hierzu können auf die jeweiligen Oberflächen beispielsweise eine handelsübliche Wärmeleitpaste, ein (Papier-)Aufkleber oder Tape mit geeignetem Durchlässigkeitsverhalten (vorzugsweise einem geringen Reflexionsgrad), eine geeignete Flüssigkeit (z.B. mit zwei Volumenteilen matter schwarzer Farbe und einem Volumenteil Isopropanol) oder (z.B. in Teflonfiltern gespeicherte) Russpartikel aufgebracht werden.

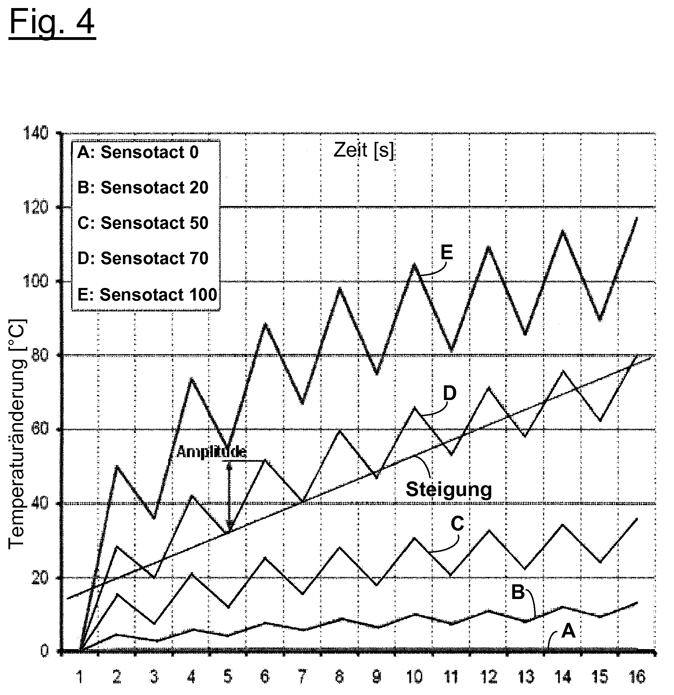

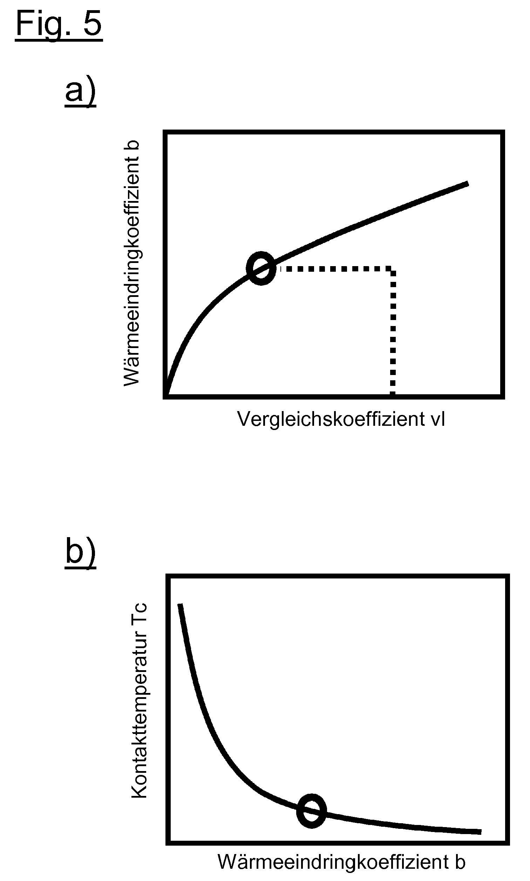

Im Weiteren wird unter Bezugnahme auf Fig. 4 und Fig. 5a-d die erfindungsgemäße Bestimmung der Kontakttemperatur eines zu untersuchenden Materials bzw. die Quantifizierung des Temperaturgefühls bei der Berührung der betreffenden Oberfläche erläutert.

Bei dem erfindungsgemäßen Verfahren wird unter Verwendung der in den Fig. 1a-b und Fig. 2 dargestellten Anordnung eine getaktete Erwärmung der betreffenden Oberfläche durchgeführt, und zwar zur Kalibrierung der Anordnung jeweils zunächst für eine Reihe von Referenzproben (sog. "Sensotact-Proben"). Die einzelnen Referenzproben bestehen aus voneinander verschiedenen Materialien (wie z.B. Styropor, Holz, Teflon oder Aluminium).

Die Erwärmung mittels periodischer Taktung wird hierbei aufgrund der in der Anordnung von Fig. 1a-b und Fig. 2 rotierenden Öffnungen 40 in der Scheibe bzw. Abschirmung 30 erzielt und ergibt bei Messung der Temperaturänderung in Abhängigkeit von der Zeit gemäß Fig. 4 charakteristische Sägezahnkurven "A" bis "E" (für die zur Kalibrierung verwendeten Sensotact-Proben mit den Proben-Bezeichnungen 0, 20, 50, 70 und 100). Die Taktung kann dabei lediglich beispielhaft so gewählt werden, dass mit einer Frequenz von 1 Hz Messwerte aufgezeichnet werden.

Aus diesen Sägezahnkurven werden gemäß Fig. 4 zum einen die Steigung der Regressionsgerade (durch die Messkurve Temperaturänderung vs. Zeit) und zum anderen die Amplituden der Abklingkurven der einzelnen, durch die getaktete Erwärmung erzeugten "Schwingungen" berechnet.

Aus den durchschnittlichen Amplitudenwerten und dem Wert der Steigung wird sodann ein Vergleichskoeffizient vl wie folgt bestimmt:

$$vl = \frac{1}{m \cdot a} \qquad (1)$$

wobei m die Steigung der Regressionsgerade und a die durchschnittliche Amplitude der Abklingkurven bezeichnen.

Die zur Kalibrierung verwendeten Referenz- bzw. Sensotact-Proben weisen ferner unterschiedliche, jeweils bekannte Werte für die Wärmeeindringzahl b auf, welche wie folgt definiert ist:

$$b = \frac{q_0}{\sqrt{\pi}} \cdot \frac{d(\sqrt{t})}{d\vartheta_O} \qquad (2)$$

mit $q_o = \dfrac{Q}{A}$ und

*b:* Wärmeeindringzahl

$\lambda:$ Wärmeleitfähigkeit

$c$ Wärmekapazität

$\gamma:$ Dichte

$\vartheta_0:$ Temperatur der Oberfläche

Die Auftragung der zu den jeweiligen Referenzproben bzw. Wärmeeindringzahlen b ermittelten Vergleichskoeffizienten vl ergibt die in Fig. 5a schematisch dargestellte Korrelation. Über diese Korrelation kann somit bei einer nachfolgenden Messung jedem Vergleichswert vl ein entsprechender Wert für die Wärmeeindringzahl b und somit eine Kontakttemperatur $T_c$ des untersuchten Materials gemäß Fig. 5b zugeordnet werden.

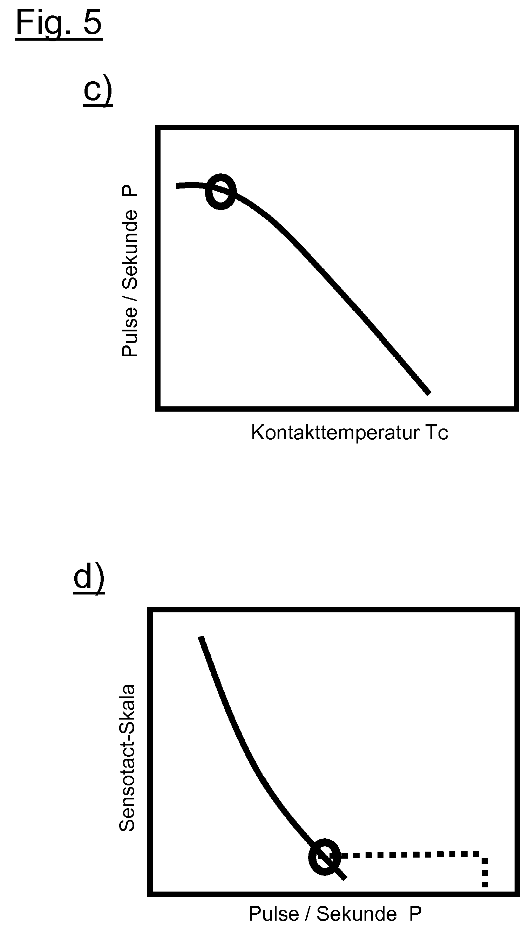

Da die Kontakttemperatur $T_c$ wiederum direkt mit der menschlichen Temperaturwahrnehmung korreliert, kann also auch das Temperaturgefühl bei der Berührung unterschiedlicher Oberflächen zumindest näherungsweise quantifiziert werden. Dies ist schematisch in den Fig. 5c und 5d dargestellt, wobei in Fig. 5c der Kontakttemperatur $T_c$ die Pulsrate bzw. Anzahl von Pulsen pro Sekunde (der Thermorezeptoren) und in Fig. 5d dieser Pulsrate ein entsprechender Skalenwert, z.B. auf einer Skala von 0 (= kalt) bis 100 (= warm) zur Charakterisierung der beim Berühren einer Oberfläche empfundenen Temperatur zugeordnet wird.

**Patentansprüche**

1. Verfahren zur Abschätzung der beim Berühren einer Oberfläche empfundenen Temperatur,

   wobei das Verfahren folgende Schritte aufweist:

   a) Berührungsloses Erwärmen der Oberfläche;
   b) Berührungsloses Messen der zeitlichen Temperaturänderung der Oberfläche; und
   c) Abschätzen der beim Berühren der Oberfläche empfundenen Temperatur auf Basis dieser zeitlichen Temperaturänderung,
   wobei
   der Schritt a) des Erwärmens ein getaktetes Erwärmen der Oberfläche umfasst;**dadurch gekennzeichnet, dass**
   der Schritt c) des Abschätzens der beim Berühren der Oberfläche empfundenen Temperatur die Ermittlung eines Parameters (vl) umfasst, der gegeben ist durch

$$vl = \frac{1}{m \cdot a}$$

wobei m die Steigung einer für die die Zeitabhängigkeit der Temperaturänderung beschreibenden Funktion ermittelten Regressionsgerade und a die mittlere Amplitude der durch die getaktete Erwärmung erzeugten Abklingkurven in dieser Funktion bezeichnen; und

der Schritt c) des Abschätzens der beim Berühren der Oberfläche empfundenen Temperatur auf Basis einer Kalibrierung erfolgt, in welcher der Parameter (vi) für eine Mehrzahl von Referenzoberflächen ermittelt wird.

**2.** Verfahren nach Anspruch 1, **dadurch gekennzeichnet, dass** die Oberfläche vor dem Schritt a) des Erwärmens zur Vereinheitlichung von Farbe und/ oder Transmissionsverhalten der Oberfläche modifiziert wird.

**3.** Vorrichtung zur Abschätzung der beim Berühren einer Oberfläche empfundenen Temperatur, **dadurch gekennzeichnet, dass** die Vorrichtung aufweist:

eine Wärmequelle (20) zum berührungslosen Erwärmen der Oberfläche, wobei die Vorrichtung zum getakteten Erwärmen der Oberfläche mittels der Wärmequelle (20) ausgelegt ist; ein Thermometer (10) zur berührungslosen Messen der Temperatur der Oberfläche; und eine Auswerteeinheit, welche auf Basis einer durch das Erwärmen hervorgerufenen zeitlichen Änderung der Temperatur der Oberfläche einen für die beim Berühren der Oberfläche empfundene Temperatur charakteristischen Parameter (vi) ermittelt, der gegeben ist durch

$$vl = \frac{1}{m \cdot a},$$

wobei m die Steigung einer für die die Zeitabhängigkeit der Temperaturänderung beschreibenden Funktion ermittelten Regressionsgerade und a die mittlere Amplitude der durch die getaktete Erwärmung erzeugten Abklingkurven in dieser Funktion bezeichnen.

**4.** Vorrichtung nach Anspruch 3 , **dadurch gekennzeichnet, dass** die Vorrichtung zum getakteten Erwärmen der Oberfläche eine rotierbare, mit wenigstens einer Öffnung (40) versehene Abschirmung (30) aufweist, wobei die Oberfläche durch die Öffnung (40) hindurch mit Wärmeenergie beaufschlagbar ist.

**Claims**

**1.** Method for estimating the temperature sensed upon contact with a surface,

wherein the method has the following steps:

a) contactless heating of the surface;
b) contactless measurement of the time change in temperature of the surface; and
c) estimation of the temperature sensed upon contact with the surface on the basis of this time change in temperature,
wherein the step a) of heating comprises pulsed heating of the surface;
**characterized in that**
the step c) of estimating the temperature sensed upon contact with the surface comprises the determination of a parameter (vl) that is given by

$$vl = \frac{1}{m \cdot a},$$

m denoting the gradient of a regression line determined for the function describing the time dependence of the temperature change, and a denoting the mean amplitude of the decay curves in this function that are produced by the pulsed heating; and
the step c) of the estimation of the temperature sensed upon contact with the surface is performed on the basis of a calibration in which the parameter (vi) is determined for a plurality of reference surfaces.

**2.** Method according to Claim 1, **characterized in that** before the step a) of heating the surface is modified in order to normalize the color and/or transmission behavior of the surface.

**3.** Device for estimating the temperature sensed upon contact with a surface, **characterized in that** the device has:

a heat source (20) for contactless heating of the surface, wherein the device is designed for the pulsed heating of the surface by means of the heat source (20); a thermometer (10) for the contactless measurement of the temperature of the surface; and an evaluation unit that determines a parameter (vi) characteristic of the temperature sensed upon contact with the surface on the basis of a time change in the temperature of the surface caused by the heating, that is given by

$$vl = \frac{1}{m \cdot a},$$

m denoting the gradient of a regression line determined for the function describing the time dependence of the temperature change, and a denoting the mean amplitude of the decay curves in this function that are produced by the pulsed heating.

**4.** Device according to Claim 3, **characterized in that** the device for the pulsed heating of the surface has a rotatable screen (30) provided with at least one opening (40), it being possible to apply thermal energy to the surface through the opening (40).

## Revendications

**1.** Procédé d'estimation d'une température ressentie lors du contact avec une surface,

dans lequel le procédé comprend les étapes consistant à :

a) chauffer sans contact la surface ;

b) mesurer sans contact la variation temporelle de température de la surface ; et

c) estimer la température ressentie lors d'un contact avec la surface sur la base de ladite variation temporelle de température, dans lequel l'étape a) de chauffage consiste à effectuer un chauffage cadencé de la surface ; **caractérisé en ce que**

l'étape c) d'estimation de la température ressentie lors d'un contact avec la surface consiste à déterminer un paramètre (vl) qui est donné par :

$$vl = \frac{1}{m \cdot a}$$

où m est la pente d'une droite de régression déterminée pour la fonction décrivant la dépendance par rapport au temps de la variation de température, et a est l'amplitude moyenne des courbes de décroissance générées par le chauffage cadencé dans ladite fonction ; et

l'étape c) d'estimation de la température ressentie lors d'un contact avec la surface est effectuée sur la base d'un étalonnage lors duquel le paramètre (vi) est déterminé pour une pluralité de surfaces de référence.

**2.** Procédé selon la revendication 1, **caractérisé en ce que** la surface est modifiée avant l'étape a) de chauffage pour uniformiser la couleur et/ou le comportement en transmission de la surface.

**3.** Dispositif d'estimation de la température ressentie lors d'un contact avec la surface, **caractérisé en ce que** le dispositif comporte :

une source de chaleur (20) destinée à chauffer sans contact la surface, dans lequel le dispositif est conçu pour chauffer de manière cadencée la surface au moyen de la source de chaleur (20) ;

un thermomètre (10) destiné à mesurer sans contact la température de la surface ; et

une unité d'évaluation qui détermine, sur la base d'une variation temporelle de la température de la surface provoquée par le chauffage, un paramètre caractéristique (vi) pour la température ressentie lors d'un contact avec la surface, lequel paramètre est donné par :

$$vl = \frac{1}{m \cdot a},$$

où m est la pente d'une droite de régression déterminée pour la fonction décrivant la dépendance par rapport au temps de la variation de température, et a est l'amplitude moyenne des courbes de décroissance générées par le chauffage cadencé dans ladite fonction.

**4.** Dispositif selon la revendication 3, **caractérisé en ce que** le dispositif destiné au chauffage cadencé de la surface comporte un écran (30) tournant doté d'au moins une ouverture (40), dans lequel la surface peut être exposée à de l'énergie thermique à travers l'ouverture (40).

# Fig. 1
## a)

## b)

# Fig. 2

# Fig. 3

# Fig. 4

# Fig. 5

## a)

Wärmeeindringkoeffizient b / Vergleichskoeffizient vl

## b)

Kontakttemperatur Tc / Wärmeeindringkoeffizient b

# Fig. 5

## c)

Kontakttemperatur Tc

## d)

Pulse / Sekunde  P

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3901377 A1
- WO 2007093744 A2
- US 7365330 B1